(19) Europäisches Patentamt
European Patent Office
Office européen des brevets

(11) **EP 4 564 510 A1**

(12) **EUROPEAN PATENT APPLICATION**
published in accordance with Art. 153(4) EPC

(43) Date of publication:
**04.06.2025 Bulletin 2025/23**

(21) Application number: **24781294.4**

(22) Date of filing: **29.03.2024**

(51) International Patent Classification (IPC):
**H01M 10/0562** (2010.01)    **H01M 10/052** (2010.01)

(52) Cooperative Patent Classification (CPC):
**H01M 10/052; H01M 10/0562**

(86) International application number:
**PCT/KR2024/004034**

(87) International publication number:
**WO 2024/205304 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 KR 20230042176**

(71) Applicant: **LG Chem, Ltd.**
**Yeongdeungpo-gu**
**Seoul 07336 (KR)**

(72) Inventors:
• **JEON, Do Yeon**
  **Daejeon 34122 (KR)**

• **LEE, Seong Ho**
  **Daejeon 34122 (KR)**
• **PARK, Chang Hun**
  **Daejeon 34122 (KR)**
• **HWANG, Jin Young**
  **Daejeon 34122 (KR)**
• **LEE, Paeng Ro**
  **Daejeon 34122 (KR)**
• **CHUNG, Ha Bin**
  **Daejeon 34122 (KR)**

(74) Representative: **Plasseraud IP**
**104 Rue de Richelieu**
**CS92104**
**75080 Paris Cedex 02 (FR)**

(54) **SOLID ELECTROLYTE AND ALL-SOLID-STATE BATTERY COMPRISING SAME**

(57) The present invention relates to a solid electrolyte that includes sulfide-based solid electrolyte particles; and a buffer layer including $Li_2CO_3$ that is formed on the sulfide-based solid electrolyte particle, wherein, in a near-infrared (NIR) spectrum, an integral value of a $Li_2CO_3$ band present in a range of 5,200 $cm^{-1}$ to 4,725 $cm^{-1}$ is in a range of 2.0 to 8.0, and an all-solid-state battery including the same.

FIG. 2

**Description**

**TECHNICAL FIELD**

Cross-reference to Related Applications

This application claims priority from Korean Patent Application No. 10-2023-0042176, filed on March 30, 2023, the disclosure of which is incorporated by reference herein.

Technical Field

The present invention relates to a solid electrolyte and an all-solid-state battery including the same.

**BACKGROUND ART**

An all-solid-state battery is a battery which replaces a liquid electrolyte filling between a positive electrode and a negative electrode of a conventional lithium secondary battery with a solid, wherein, since it has higher energy density than the conventional battery while being safe as there is no risk of explosion, it is attracting attention as a next-generation battery. A solid electrolyte used in the all-solid-state battery is a material in a solid state which may conduct lithium ions in the battery, wherein it has high ionic conductivity comparable to that of an electrolyte solution currently used in the lithium secondary battery. Core materials constituting the solid electrolyte include a polymer, a sulfide, or an oxide, but, among them, a sulfide-based solid electrolyte with high ductility and ionic conductivity is evaluated as suitable for preparing a high-capacity large battery.

However, the sulfide-based solid electrolyte has a problem in that it is decomposed while reacting with moisture in the air to generate hydrogen sulfide gas, and has a problem in that battery performance is degraded during long-term operation due to a decomposition product formed by an interfacial side reaction with an electrode material.

Thus, there is a need to develop a sulfide-based solid electrolyte which may suppress the reaction with the moisture in the air and the interfacial side reaction with the electrode material.

**DISCLOSURE OF THE INVENTION**

**TECHNICAL PROBLEM**

An object of the present invention is to provide a solid electrolyte having improved moisture stability and capable of suppressing an interfacial side reaction with an electrode material and an all-solid-state battery including the same.

However, the object of the present invention is not limited to the aforesaid, but other objects not described herein will be clearly understood by those skilled in the art from descriptions below.

**TECHNICAL SOLUTION**

In order to solve the above-described tasks, the present invention provides a solid electrolyte and an all-solid-state battery including the same.

(1) The present invention provides a solid electrolyte which includes sulfide-based solid electrolyte particles; and a buffer layer including $Li_2CO_3$ which is formed on the sulfide-based solid electrolyte particle, wherein, in a near-infrared (NIR) spectrum, an integral value of a $Li_2CO_3$ band present in a range of 5,200 cm$^{-1}$ to 4,725 cm$^{-1}$ is in a range of 2.0 to 8.0.

(2) The present invention provides the solid electrolyte of (1) above, wherein the sulfide-based solid electrolyte has an argyrodite-type crystal structure.

(3) The present invention provides the solid electrolyte of (1) or (2) above, wherein the sulfide-based solid electrolyte has a composition represented by Formula 1.

$$[Formula\ 1] \qquad Li_a(P_{1-b}M_b)S_{6-c}X_c$$

In Formula 1,
  M is at least one selected from antimony (Sb), tin (Sn), germanium (Ge), silicon (Si), niobium (Nb), nickel (Ni), gallium (Ga), and aluminum (Al),
  X is at least one selected from fluorine (F), chlorine (Cl), bromine (Br), and iodine (I), and

5.0<a<7.5, 0≤b≤0.7, and 0<c≤2.0.

(4) The present invention provides the solid electrolyte of any one of (1) to (3) above, wherein ionic conductivity is in a range of 3 mS/cm to 12 mS/cm.

(5) The present invention provides the solid electrolyte of any one of (1) to (4) above, wherein, in the NIR spectrum, an integral value of a LiOH band present in a range of 7,200 $cm^{-1}$ to 7,140 $cm^{-1}$ is less than 0.1.

(6) The present invention provides the solid electrolyte of any one of (1) to (5) above, wherein, in a 2p spectrum of phosphorus (P) which is obtained by X-ray photoelectron spectroscopy (XPS) analysis, a ratio ($A_2/(A_1+A_2)$) of a $PO_xS_{4-x}^{3-}$ peak area ($A_2$) to a sum of a $PS_4^{3-}$ peak area ($A_1$) and the $PO_xS_{4-x}^{3-}$ peak area ($A_2$) is less than 0.1.

(7) The present invention provides an all-solid-state battery including the solid electrolyte of any one of (1) to (6) above.

## ADVANTAGEOUS EFFECTS

Since a solid electrolyte according to the present invention includes a buffer layer including $Li_2CO_3$ which is formed on a sulfide-based solid electrolyte particle; and, in a near-infrared (NIR) spectrum, an integral value of a $Li_2CO_3$ band present in a range of 5,200 $cm^{-1}$ to 4,725 $cm^{-1}$ satisfies a range of 2.0 to 8.0, a stable phase is maintained when exposed to moisture during a battery preparation process and an interfacial side reaction between the solid electrolyte and an electrode material may be suppressed, and thus, the solid electrolyte is advantageous in that it may improve battery characteristics.

## BRIEF DESCRIPTION OF THE DRAWINGS

FIG. 1 is X-ray diffraction (XRD) peaks of a solid electrolyte of Example 5.
FIG. 2 is X-ray photoelectron spectroscopy (XPS) data of solid electrolytes of Examples 1 to 3 and Comparative Examples 3 and 6.
FIG. 3 is rate capability evaluation data of all-solid-state batteries including solid electrolytes of Example 1 and Comparative Example 1.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

In this specification, it will be further understood that the terms "include," "comprise," or "have" specify the presence of stated features, numbers, steps, elements, or combinations thereof, but do not preclude the presence or addition of one or more other features, numbers, steps, elements, or combinations thereof.

Room temperature in this specification means 20°C to 25°C.

## Solid Electrolyte

A solid electrolyte according to the present invention includes sulfide-based solid electrolyte particles; and a buffer layer including $Li_2CO_3$ which is formed on the sulfide-based solid electrolyte particle, wherein, in a near-infrared (NIR) spectrum, an integral value of a $Li_2CO_3$ band present in a range of 5,200 $cm^{-1}$ to 4,725 $cm^{-1}$ is in a range of 2.0 to 8.0.

The present inventors found that, in a case in which a solid electrolyte includes sulfide-based solid electrolyte particles; and a buffer layer including $Li_2CO_3$ which is formed on the sulfide-based solid electrolyte particle, wherein, in a NIR spectrum, an integral value of a $Li_2CO_3$ band present in a range of 5,200 $cm^{-1}$ to 4,725 $cm^{-1}$ satisfies a range of 2.0 to 8.0, since moisture stability of the solid electrolyte is improved, a stable phase of the solid electrolyte is maintained during a battery preparation process, and, as a result, lifetime and rate capability of a battery may be improved, thereby leading to the completion of the present invention.

According to the present invention, the sulfide-based solid electrolyte may have an argyrodite-type crystal structure in terms of high ionic conductivity and low reactivity with a lithium negative electrode.

The sulfide-based solid electrolyte may be a sulfide-based solid electrolyte containing lithium (Li), phosphorus (P), and sulfur (S).

According to the present invention, the sulfide-based solid electrolyte may have a composition represented by Formula 1 below. In this case, ion conductivity may be excellent even after the formation of the buffer layer.

[Formula 1] $\quad\quad Li_a(P_{1-b}M_b)S_{6-c}X_c$

In Formula 1,

M is at least one selected from antimony (Sb), tin (Sn), germanium (Ge), silicon (Si), niobium (Nb), nickel (Ni), gallium (Ga), and aluminum (Al),

X is at least one selected from fluorine (F), chlorine (Cl), bromine (Br), and iodine (I), and

$5.0 < a < 7.5$, $0 \leq b \leq 0.7$, and $0 < c \leq 2.0$.

M is a cation doped at a position of P, wherein it may specifically be at least one selected from Sb, Sn, Ge, and Si. In this case, since an oxidation number is similar to that of P, it may be easily doped (substituted) at the position of P.

X may specifically be Cl, Br, or a combination thereof. In this case, since a degree of disorder of anion arrangement is increased, a lithium ion conduction path is changed, and, as a result, ionic conductivity may be further increased.

a may be greater than 5.0, 5.1, 5.2, 5.3, 5.4 or more, 6.6, 6.7, 6.8, 6.9, 7.0, 7.1, 7.2, 7.3, 7.4 or less, and less than 7.5. a may more specifically be in a range of 5.4 to 6.6. In this case, since an argyrodite phase having an appropriate lithium concentration may be formed, the ionic conductivity may be higher.

b may be 0 or more, 0.3, 0.4, 0.5, 0.6, or 0.7 or less. b may more specifically be in a range of 0 to 0.3. In this case, since a cation doping amount (substitution amount) is appropriate, an amount of impurities may be reduced.

c may be greater than 0, 0.1, 0.2, 0.3, 0.4, 0.5, 0.6, 0.7, 0.8, 0.9, 1.0 or more, 1.6, 1.7, 1.8, 1.9, and 2.0 or less. In this case, since the argyrodite phase may be formed and the degree of disorder of anion arrangement is increased, the ionic conductivity may be higher.

The buffer layer may be a mixture of $Li_2CO_3$ and the argyrodite-type crystal structure.

According to the present invention, the solid electrolyte may have an integral value of a $Li_2CO_3$ band present in a range of 5,200 $cm^{-1}$ to 4,725 $cm^{-1}$ in the NIR spectrum of 2.0 to 8.0. Specifically, in the NIR spectrum, the integral value of the $Li_2CO_3$ band present in the range of 5,200 $cm^{-1}$ to 4,725 $cm^{-1}$ may be 2.0 or more, 2.1 or more, 2.2 or more, 2.3 or more, 2.4 or more, 2.5 or more, 2.6 or more, 2.7 or more, 2.8 or more, 2.9 or more, 3.0 or more, 3.1 or more, 3.2 or more, or 3.3 or more, and may be 6.6 or less, 6.7 or less, 6.8 or less, 6.9 or less, 7.0 or less, 7.1 or less, 7.2 or less, 7.3 or less, 7.4 or less, 7.5 or less, 7.6 or less, 7.7 or less, 7.8 or less, 7.9 or less, or 8.0 or less. In this case, since an appropriate amount of the buffer layer is formed, there is an advantage of higher ionic conductivity performance while it is effective in blocking a side reaction.

In the NIR spectrum of the solid electrolyte, in a case in which the integral value of the $Li_2CO_3$ band present in the range of 5,200 $cm^{-1}$ to 4,725 $cm^{-1}$ is less than 2.0, since the buffer layer is not sufficiently formed, there is no effect of blocking the side reaction, and, in a case in which the integral value of the $Li_2CO_3$ band present in the range of 5,200 $cm^{-1}$ to 4,725 $cm^{-1}$ is greater than 8.0, since an impurity phase in addition to the argyrodite-type crystal structure is excessively formed, there is a problem of low ionic conductivity.

According to the present invention, the solid electrolyte may have an ionic conductivity of 3 mS/cm to 12 mS/cm.

According to the present invention, the solid electrolyte may have an integral value of a LiOH band present in a range of 7,200 $cm^{-1}$ to 7,140 $cm^{-1}$ in the NIR spectrum of less than 0.1. That is, since the buffer layer of the solid electrolyte may expose the electrolyte particles at a sufficiently low dew point, it may include little lithium hydroxide. In this case, since an amount of a secondary phase formed is small, there is an advantage of high ionic conductivity performance. Specifically, the solid electrolyte may have the integral value of the LiOH band present in the range of 7,200 $cm^{-1}$ to 7,140 $cm^{-1}$ in the NIR spectrum of 0.

According to the present invention, in a 2p spectrum of phosphorus (P) which is obtained by X-ray photoelectron spectroscopy (XPS) analysis, the solid electrolyte may have a ratio $(A_2/(A_1+A_2))$ of a $PO_xS_{4-x}^{3-}$ peak area $(A_2)$ to a sum of a $PS_4^{3-}$ peak area $(A_1)$ and the $PO_xS_{4-x}^{3-}$ peak area $(A_2)$ of less than 0.1, specifically 0.09 or less, and more specifically 0.085 or less (in $PO_xS_{4-x}^{3-}$, x satisfies $0 < x < 4$). That is, in the buffer layer of the solid electrolyte, since a bond within a $PS_4^{3-}$ unit is not broken down, a $PO_xS_{4-x}^{3-}$ bond may not exist. In this case, since the amount of the secondary phase formed is small, there is an advantage of high ionic conductivity performance.

Since the solid electrolyte according to the present invention, for example, allows a trace amount of moisture and carbon dioxide to react with the sulfide-based solid electrolyte particles by exposing the sulfide-based solid electrolyte particles to air with a dew point temperature of greater than -40°C to -20°C, it may be prepared by forming a buffer layer including $Li_2CO_3$ on the sulfide-based solid electrolyte particles and then drying the sulfide-based solid electrolyte particles on which the buffer layer including $Li_2CO_3$ has been formed, but the present invention is not limited thereto.

In this case, the exposure may be performed at room temperature to control an extreme reaction with moisture. The room temperature in the present invention may mean 20°C to 25°C. In addition, the exposure may be performed for 1 hour to 10 hours. Specifically, the exposure may be performed for 1 hour, 2 hours, 3 hours or more, 4 hours, 5 hours, or 10 hours or less. In this case, there is an advantage in that a buffer layer with appropriate ionic conductivity is formed.

The drying may be vacuum drying which is performed in a vacuum state in order to quickly remove residual moisture adsorbed on a surface. The drying may be performed at a temperature of 50°C to 150°C in terms of inhibiting aggregation of the particles while sufficiently removing moisture. Specifically, the drying may be performed at a temperature of 50°C, 55°C or higher, 60°C, 70°C, 80°C, 90°C, 100°C, 110°C, 120°C, 130°C, 140°C, or 150°C or lower. The drying may be performed for 5 hours to 24 hours to sufficiently remove the moisture. Specifically, the drying may be performed for 5 hours, 7 hours, 9 hours or more, 10 hours, 12 hours, or 24 hours or less.

## All-Solid-State Battery

The present invention provides an all-solid-state battery including the above solid electrolyte.

Specifically, the all-solid-state battery includes a positive electrode including a positive electrode active material, a negative electrode including a negative electrode active material, and a solid electrolyte layer including the solid electrolyte according to the present invention which is disposed between the positive electrode and the negative electrode.

Since the all-solid-state battery according to the present invention has a small decrease in ionic conductivity due to moisture, initial efficiency, life characteristics, and output characteristics of the battery may be excellent.

In this case, the all-solid-state battery of the present invention may be prepared according to a typical method known in the art. For example, the all-solid-state battery of the present invention may be prepared by stacking and pressing such that the solid electrolyte layer exists between the positive electrode and the negative electrode.

## (1) Positive Electrode

The positive electrode may be prepared by coating a positive electrode collector with a slurry for a positive electrode which includes a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, microscopic irregularities may be formed on its surface to improve bonding strength with the positive electrode active material, and the positive electrode collector may be used in various shapes such as that of a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-y}Mn_yO_2$ (where 0<Y<1), $LiMn_{2-z}Ni_zO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1), $LiMn_{2-Z1}Co_{z1}O_4$ (where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or $Li(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{s2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium metal oxide may be $LiCoO_2$, $LiMnO_2$, $LiNiO_2$, lithium nickel manganese cobalt oxide (e.g., $Li(Ni_{1/3}Mn_{1/3}Co_{1/3})O_2$, $Li(Ni_{0.6}Mn_{0.2}CO_{0.2})O_2$, $Li(Ni_{0.5}Mn_{0.3}CO_{0.2})O_2$, $Li(Ni_{0.7}Mn_{0.15}Co_{0.15})O_2$, and $Li(Ni_{0.8}Mn_{0.1}Co_{0.1})O_2$, etc.), or lithium nickel cobalt aluminum oxide (e.g., $LiNi_{0.8}Co_{0.15}Al_{0.05}O_2$, etc.), and, in consideration of a significant improvement effect due to the control of types and content ratios of components constituting the lithium composite metal oxide, the lithium composite metal oxide may be $Li(Ni_{0.6}Mn_{0.2}CO_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on a total weight of solid content excluding the solvent in the slurry for a positive electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The conductive agent is a component for further improving conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, or thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

### (2) Negative Electrode

The negative electrode, for example, may be prepared by coating a slurry for a negative electrode, which includes a negative electrode active material, a binder, a conductive agent, and a solvent, on a negative electrode collector, or a graphite electrode formed of carbon (C) or a metal itself may be used as the negative electrode.

For example, in a case in which the negative electrode is prepared by coating the slurry for a negative electrode on the negative electrode collector, the negative electrode collector generally has a thickness of 3 $\mu$m to 500 $\mu$m. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material may include at least one negative electrode active material selected from the group consisting of natural graphite, artificial graphite, a carbonaceous material; lithium-containing titanium composite oxide (LTO), silicon (Si), $SiO_x$, metals (Me) such as Sn, lithium (Li), zinc (Zn), magnesium (Mg), cadmium (Cd), cerium (Ce), Ni, or Fe; alloys composed of the metals (Me); oxides ($MeO_x$) of the metals (Me); and composites of the metals (Me) and carbon. A silicon-based negative electrode active material including silicon (Si), silicon oxide ($SiO_x$), or a silicon alloy may specifically be used as the negative electrode active material. In this case, since a thin and stable solid electrolyte interphase (SEI) layer containing a siloxane bond is formed, the high-temperature stability and life characteristics of the battery may be further improved.

The negative electrode active material may be included in an amount of 60 wt% to 99 wt%, preferably 70 wt% to 99 wt%, and more preferably 80 wt% to 98 wt% based on a total weight of solid content excluding the solvent in the slurry for a negative electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the slurry for a negative electrode.

The conductive agent is a component for further improving conductivity of the negative electrode active material. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the slurry for a negative electrode.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, preferably, 70 wt% to 90 wt%.

In a case in which the metal itself is used as the negative electrode, the negative electrode may be a metal thin film itself or may be prepared by a method in which the metal is physically bonded, rolled, or deposited on the negative electrode collector. As the deposition method, an electrical deposition method or a chemical vapor deposition method for the metal may be used.

For example, the metal thin film itself or the metal to be bonded/rolled/deposited on the negative electrode collector may include one type of metal selected from the group consisting of lithium (Li), nickel (Ni), tin (Sn), copper (Cu), and indium (In) or an alloy of two types of metals.

### (3) Solid Electrolyte Layer

The solid electrolyte layer may further include a binder in addition to the solid electrolyte according to the present invention.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on a total weight of the solid electrolyte layer.

The present invention provides a battery module including the all-solid-state battery as a unit cell and a battery pack including the battery module may be provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

### Preparation Examples

### Preparation Example 1

4 types of precursors, $Li_2S$, $P_2S_5$, LiCl, and LiBr, were dry-mixed (ball-milled) at a molar ratio of 1.9:0.5:0.6:1.0. During the dry mixing, a planetary ball mill, into which zirconia balls were introduced, was used and rotated at a speed of 300 rpm or more for uniform mixing. Thereafter, the mixed precursor thus obtained was crystallized by performing a heat treatment at 400°C to 550°C for 12 hours, and then ground again through ball milling to prepare $Li_{5.4}PS_{4.4}Cl_{0.6}Br_{1.0}$ particles having an argyrodite-type crystal structure. All of the above processes were performed in an inert argon (Ar) atmosphere.

**Preparation Example 2**

4 types of precursors, $Li_2S$, $P_2S_5$, LiCl, and LiBr, were dry-mixed (ball-milled) at a molar ratio of 2.0:0.5:0.5:1.0. During the dry mixing, a planetary ball mill, into which zirconia balls were introduced, was used and rotated at a speed of 300 rpm or more for uniform mixing. Thereafter, the mixed precursor thus obtained was crystallized by performing a heat treatment at 400°C to 550°C for 12 hours, and then ground again through ball milling to prepare $Li_{5.5}PS_{4.5}Cl_{0.5}Br_{1.0}$ particles having an argyrodite-type crystal structure. All of the above processes were performed in an inert Ar atmosphere.

**Preparation Example 3**

4 types of precursors, $Li_2S$, $P_2S_5$, LiCl, and LiBr, were dry-mixed (ball-milled) at a molar ratio of 1.9:0.5:1.0:0.6. During the dry mixing, a planetary ball mill, into which zirconia balls were introduced, was used and rotated at a speed of 300 rpm or more for uniform mixing. Thereafter, the mixed precursor thus obtained was crystallized by performing a heat treatment at 400°C to 550°C for 12 hours, and then ground again through ball milling to prepare $Li_{5.4}PS_{4.4}Cl_{1.0}Br_{0.6}$ particles having an argyrodite-type crystal structure. All of the above processes were performed in an inert Ar atmosphere.

**Preparation Example 4**

3 types of precursors, $Li_2S$, $P_2S_5$, and LiCl, were dry-mixed (ball-milled) at a molar ratio of 2:0.5:1.5. During the dry mixing, a planetary ball mill, into which zirconia balls were introduced, was used and rotated at a speed of 300 rpm or more for uniform mixing. Thereafter, the mixed precursor thus obtained was crystallized by performing a heat treatment at 400°C to 550°C for 12 hours, and then ground again through ball milling to prepare $Li_{5.5}PS_{4.5}Cl_{1.5}$ particles having an argyrodite-type crystal structure. All of the above processes were performed in an inert Ar atmosphere.

**Preparation Example 5**

3 types of precursors, $Li_2S$, $P_2S_5$, and LiBr, were dry-mixed (ball-milled) at a molar ratio of 2.5:0.5:1.0. During the dry mixing, a planetary ball mill, into which zirconia balls were introduced, was used and rotated at a speed of 300 rpm or more for uniform mixing. Thereafter, the mixed precursor thus obtained was crystallized by performing a heat treatment at 400°C to 550°C for 12 hours, and then ground again through ball milling to prepare $Li_6PS_5Br$ particles having an argyrodite-type crystal structure. All of the above processes were performed in an inert Ar atmosphere.

**Preparation Example 6**

3 types of precursors, $Li_2S$, $P_2S_5$, and LiCl, were dry-mixed (ball-milled) at a molar ratio of 2.5:0.5:1.0. During the dry mixing, a planetary ball mill, into which zirconia balls were introduced, was used and rotated at a speed of 300 rpm or more for uniform mixing. Thereafter, the mixed precursor thus obtained was crystallized by performing a heat treatment at 400°C to 550°C for 12 hours, and then ground again through ball milling to prepare $Li_6PS_5Cl$ particles having an argyrodite-type crystal structure. All of the above processes were performed in an inert Ar atmosphere.

**Examples and Comparative Examples**

**Example 1**

The $Li_{5.4}PS_{4.4}Cl_{0.6}Br_{1.0}$ particles having an argyrodite-type crystal structure, which had been prepared in Preparation Example 1, were exposed to air with a dew point temperature adjusted to -30°C at room temperature for 5 hours, and then vacuum-dried at 80°C for 12 hours to prepare solid electrolyte A.

**Example 2**

The $Li_{5.4}PS_{4.4}Cl_{0.6}Br_{1.0}$ particles having an argyrodite-type crystal structure, which had been prepared in Preparation Example 1, were exposed to air with a dew point temperature adjusted to -35°C at room temperature for 5 hours, and then vacuum-dried at 80°C for 12 hours to prepare solid electrolyte B.

**Example 3**

The $Li_{5.4}PS_{4.4}Cl_{0.6}Br_{1.0}$ particles having an argyrodite-type crystal structure, which had been prepared in Preparation Example 1, were exposed to air with a dew point temperature adjusted to -25°C at room temperature for 5 hours, and then vacuum-dried at 80°C for 12 hours to prepare solid electrolyte C.

**Example 4**

The $Li_{5.5}PS_{4.5}Cl_{0.5}Br_{1.0}$ particles having an argyrodite-type crystal structure, which had been prepared in Preparation Example 2, were exposed to air with a dew point temperature adjusted to -30°C at room temperature for 5 hours, and then vacuum-dried at 80°C for 12 hours to prepare solid electrolyte D.

**Example 5**

The $Li_{5.4}PS_{4.4}Cl_{1.0}Br_{0.6}$ particles having an argyrodite-type crystal structure, which had been prepared in Preparation Example 3, were exposed to air with a dew point temperature adjusted to -30°C at room temperature for 5 hours, and then vacuum-dried at 80°C for 12 hours to prepare solid electrolyte E.

**Example 6**

The $Li_{5.5}PS_{4.5}Cl_{1.5}$ particles having an argyrodite-type crystal structure, which had been prepared in Preparation Example 4, were exposed to air with a dew point temperature adjusted to -30°C at room temperature for 5 hours, and then vacuum-dried at 80°C for 12 hours to prepare solid electrolyte F.

**Comparative Example 1**

The $Li_{5.4}PS_{4.4}Cl_{0.6}Br_{1.0}$ having an argyrodite-type crystal structure, which had been prepared in Preparation Example 1, was used as solid electrolyte G of Comparative Example 1.

**Comparative Example 2**

The $Li_{5.4}PS_{4.4}Cl_{1.0}Br_{0.6}$ having an argyrodite-type crystal structure, which had been prepared in Preparation Example 3, was used as solid electrolyte H of Comparative Example 1.

**Comparative Example 3**

The $Li_{5.4}PS_{4.4}Cl_{0.6}Br_{1.0}$ particles having an argyrodite-type crystal structure, which had been prepared in Preparation Example 1, were exposed to air with a dew point temperature adjusted to -40°C at room temperature for 5 hours, and then vacuum-dried at 80°C for 12 hours to prepare solid electrolyte I.

**Comparative Example 4**

The $Li_{5.4}PS_{4.4}Cl_{0.6}Br_{1.0}$ particles having an argyrodite-type crystal structure, which had been prepared in Preparation Example 1, were exposed to air with a dew point temperature adjusted to 10°C at room temperature for 3 hours, and then vacuum-dried at 80°C for 12 hours to prepare solid electrolyte J.

**Comparative Example 5**

The $Li_{5.5}PS_{4.5}Cl_{1.5}$ having an argyrodite-type crystal structure, which had been prepared in Preparation Example 4, was used as solid electrolyte K of Comparative Example 10.

**Comparative Example 6**

The $Li_6PS_5Br$ particles having an argyrodite-type crystal structure, which had been prepared in Preparation Example 5, were exposed to air with a dew point temperature adjusted to -30°C at room temperature for 5 hours, and then left standing for 7 weeks without a drying treatment to prepare solid electrolyte L.

**Comparative Example 7**

The $Li_6PS_5Cl$ particles having an argyrodite-type crystal structure, which had been prepared in Preparation Example 6, were exposed to air with a dew point temperature adjusted to 10°C at room temperature for 3 hours, and then vacuum-dried at 80°C for 12 hours to prepare solid electrolyte M.

**Experimental Examples**

**Experimental Example 1: Crystal Structure Analysis**

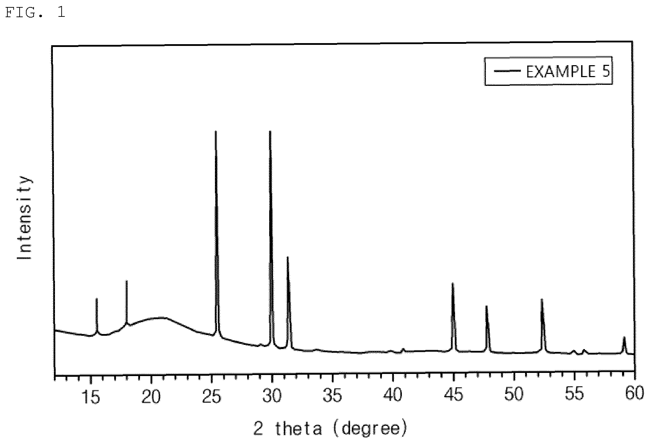

A crystal form of the solid electrolyte prepared in Example 5 was observed using X-ray diffraction (XRD) analysis. FIG. 1 is XRD peaks of the solid electrolyte of Example 5.

Referring to FIG. 1, it may be confirmed that the solid electrolyte of Example 5 had an argyrodite-type crystal structure.

**Experimental Example 2: Solid Electrolyte Surface Analysis**

**(1) NIR analysis**

Measuring instrument: MB3600 by ABB

Spec:

- Covering Range: 3,700 to 14,885 cm$^{-1}$ range
- Interferometer Mechanism: High-throughput double pivot Michelson
- NIR Source: Quartz-halogen (Elec. Controlled)
- Laser Source: Solid-state Laser (Long lifetime)
- Optics materials: Completely non-Hygroscopic optics (ZnSe)
- TE cooled InGaAs detector

After each of the solid electrolyte powders prepared in the examples and the comparative examples was taken and put into a glass vial, a Fourier transform near-infrared (FT-NIR) diffuse reflectance accessory was installed to secure a NIR reflectance spectrum of the solid electrolyte in the glass vial (8cm$^{-1}$ resolution, 32 scans). After baseline correction at 5,300 cm$^{-1}$ and 4,685 cm$^{-1}$, an integral value of a $Li_2CO_3$ band present in a range of 5,200 cm$^{-1}$ to 4,725 cm$^{-1}$ in the NIR spectrum of each of the solid electrolytes A to M was confirmed. After baseline correction at 7,230 cm$^{-1}$ and 7,120 cm$^{-1}$ under the same conditions, an integral value of a LiOH band present in a range of 7,200 cm$^{-1}$ to 7,140 cm$^{-1}$ was confirmed and presented in Table 1 below.

**(2) XPS analysis**

Measuring instrument: K-Alpha+ by ThermoFisher Scientific, Inc.

Spec:

- X-ray source: monochromatic Al K$\alpha$ (1486.6 eV)
- Operating mode: CAE (Constant Analyzer Energy) mode
- Software: Avantage software (version 5.992)
- X-ray spot size: 400 $\mu$m
- Charge compensation: default FG03 mode (100 $\mu$A, 0.5 V)
- Pass energy: 50 eV

A sample in the form of a pellet was attached to a sample holder in an argon atmosphere glove box. The sample was capped using a VTM (Vacuum Transfer Module) holder to inhibit exposure to the air, and then introduced into an instrument chamber. A region corresponding to a binding energy of 120 eV to 140 eV was scanned with an energy step of 0.1 eV.

After peak fitting of a 2p spectrum of phosphorus (P) which was obtained by X-ray photoelectron spectroscopy (XPS) analysis of each of the solid electrolytes A to M, an area ($A_1$) of a $PS_4^{3-}$ peak corresponding to a binding energy of 131.63 eV and an area ($A_2$) of a $PO_xS_{4-x}^{3-}$ peak corresponding to a binding energy of 132.85 eV were obtained, and a $A_2/(A_1+A_2)$ value was calculated and presented in Table 1 below. Peak fitting conditions used were as follows: L/G ratio: 0.3, FWHM: 0.9 to 1.2 eV, and energy difference: 1.3$\pm$0.1 eV.

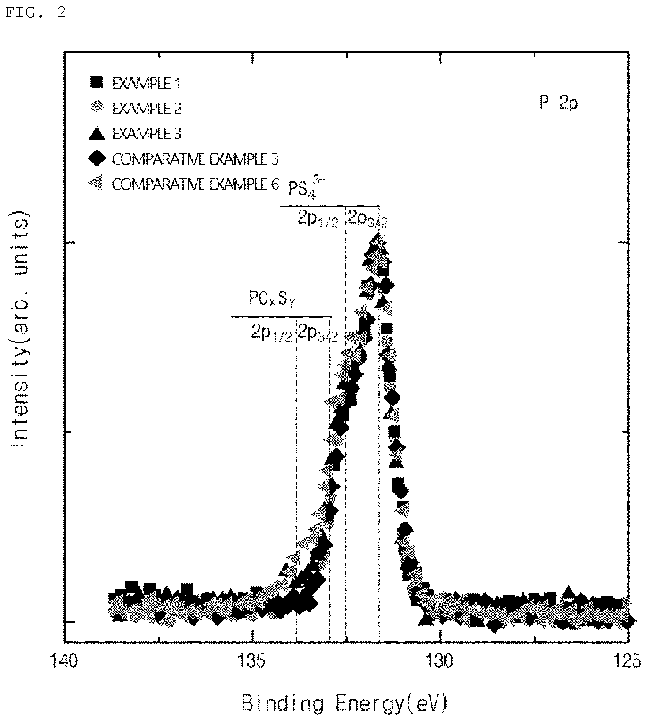

FIG. 2 is XPS data of the solid electrolytes of Examples 1 to 3 and Comparative Examples 3 and 6.

[Table 1]

| Category | NIR | | XPS |
|---|---|---|---|
| | Integral value of $Li_2CO_3$ band | Integral value of LiOH band | $A_2/(A_1+A_2)$ |
| Example 1 | 5.63 | 0 | 0.029 |
| Example 2 | 3.37 | 0 | 0.000 |
| Example 3 | 6.6 | 0 | 0.083 |
| Example 4 | 4.68 | 0 | 0.029 |
| Example 5 | 6.42 | 0 | 0.038 |
| Example 6 | 5.34 | 0 | 0.048 |
| Comparative Example 1 | 1.25 | 0 | 0.020 |
| Comparative Example 2 | 1.4 | 0 | 0.010 |
| Comparative Example 3 | 1.96 | 0 | 0.000 |
| Comparative Example 4 | 40.3 | 1.6 | - |
| Comparative Example 5 | 1.04 | 0 | 0.014 |
| Comparative Example 6 | 8.69 | 0 | 0.167 |
| Comparative Example 7 | 32.1 | 1.32 | - |

**Experimental Example 3: Evaluation of Ionic Conductivity of the Solid Electrolyte**

150 mg of each of the solid electrolyte powders of Examples 1 to 6 and Comparative Examples 1 to 7 was taken and put into a SUS mold with a diameter of 13 mm. A potentiostat was connected to the SUS mold in a state in which the mold was mounted on a press along with PEEK for insulation. After an electrolyte structure was sufficiently densified by pressing at a pressure of 370 MPa, alternating current impedance measurement was performed at a measurement frequency of 1 Hz to 7 MHz while the pressure was slowly reduced and maintained at 100 MPa. Through a Nyquist plot, ionic conductivity (initial ionic conductivity) was calculated from the measured resistance values and presented in Table 2 below. All measurements were conducted in a drying room at a temperature of 22°C and a relative humidity of 0.7%.

Immediately after each of the solid electrolyte powders prepared in Examples 1 to 6 and Comparative Examples 1 to 3 and 5 was exposed to air with a relative humidity of 1.91% for 5 hours, 150 mg of each solid electrolyte powder was taken and put into a SUS mold with a diameter of 13 mm. A potentiostat was connected to the SUS mold in a state in which the mold was mounted on a press along with PEEK for insulation. After an electrolyte structure was sufficiently densified by pressing at a pressure of 370 MPa, alternating current impedance measurement was performed at a measurement frequency of 1 Hz to 7 MHz while the pressure was slowly reduced and maintained at 100 MPa. Through a Nyquist plot, ionic conductivity after moisture exposure was calculated from the measured resistance values, and an ionic conductivity retention ratio was calculated according to Equation 1 below and presented in Table 2 below. All measurements were conducted in a drying room at a temperature of 22°C and a relative humidity of 0.7%. Since initial ionic conductivities of the solid electrolyte powders of Comparative Examples 4, 6, and 7 were excessively low, the ionic conductivity retention ratio was not evaluated.

[Equation 1]

$$\text{Ionic conductivity retention ratio (\%)} = \frac{\text{ionic conductivity after moisture exposure (mS/cm)}}{\text{initial ionic conductivity (mS/cm)}} \times 100$$

[Table 2]

| Category | Initial ionic conductivity (mS/cm) | Ionic conductivity retention ratio (%) |
|---|---|---|
| Example 1 | 6.00 | 51 |
| Example 2 | 6.17 | 52 |
| Example 3 | 5.54 | 49 |
| Example 4 | 5.14 | 58 |
| Example 5 | 4.66 | 59 |
| Example 6 | 3.24 | 55 |
| Comparative Example 1 | 6.77 | 44 |
| Comparative Example 2 | 7.18 | 33 |
| Comparative Example 3 | 6.49 | 43 |
| Comparative Example 4 | 0.00013 | - |
| Comparative Example 5 | 5.41 | 24 |
| Comparative Example 6 | 1.01 | - |
| Comparative Example 7 | 0.00022 | - |

Referring to Table 1, it may be confirmed that the solid electrolytes of Examples 1 to 6 not only included a buffer layer including $Li_2CO_3$ which was formed on the particle, but also had the integral value of the $Li_2CO_3$ band present in the range of 5,200 $cm^{-1}$ to 4,725 $cm^{-1}$ in the NIR spectrum of 2.0 to 8.0.

With respect to Comparative Examples 1, 2, and 5 without a surface treatment, it may be confirmed that a buffer layer did not exist on the solid electrolyte particle because an integral value of the $Li_2CO_3$ band at an impurity level was detected in the NIR spectrum. Also, with respect to Comparative Example 3, it may be confirmed that almost no buffer layer existed on the solid electrolyte particle because an integral value of the $Li_2CO_3$ band at an impurity level was detected in the NIR spectrum. Accordingly, it may be understood that the solid electrolytes of Comparative Examples 1, 2, 3, and 5 did not maintain a stable phase during a battery preparation process and had a problem of degrading battery performance.

In addition, with respect to Comparative Example 6 which was left standing without the drying treatment (removing moisture adsorbed on the surface X) after the surface treatment, it may be confirmed that phase decomposition occurred due to aging, the integral value of the $Li_2CO_3$ band present in the range of 5,200 $cm^{-1}$ to 4,725 $cm^{-1}$ in the NIR spectrum was greater than 8.0, and the $PO_xS_{4-x}^{3-}$ bond peak measured by XPS was increased. Accordingly, there was a problem of low ionic conductivity.

In addition, with respect to Comparative Examples 4 and 7, a buffer layer was formed, but since the buffer layer was not only formed excessively, but an excessive amount of an argyrodite decomposition phase was also formed, the integral value of the $Li_2CO_3$ band present in the range of 5,200 $cm^{-1}$ to 4,725 $cm^{-1}$ in the NIR spectrum was much greater than 8.0 and there was a problem of low ionic conductivity.

**Experimental Example 4: Rate Evaluation of All-Solid-State Batteries**

After preparing $LiNi_{0.8}Co_{0.1}Mn_{0.1}O_2$ as a positive electrode active material, the solid electrolyte of each of Example 1 and Comparative Example 1 as a solid electrolyte, and carbon nanofibers (CNF) as a conductive agent, the positive electrode active material : the solid electrolyte : the conductive agent were mixed at a weight ratio of 60:35:5 to prepare a positive electrode composition. A positive electrode was prepared by uniformly distributing the positive electrode composition at a loading amount of 3 mAh/cm² on the solid electrolyte filled in a 13 mm diameter load cell. Thereafter, a screw was tightened in a state in which the load cell was pressed using a flat press. A measured pressing force on the load cell was 35 MPa. A 100 μm thick lithium metal was used as a negative electrode, and a load cell (all-solid-state battery) with a negative electrode/solid electrolyte/positive electrode structure was prepared.

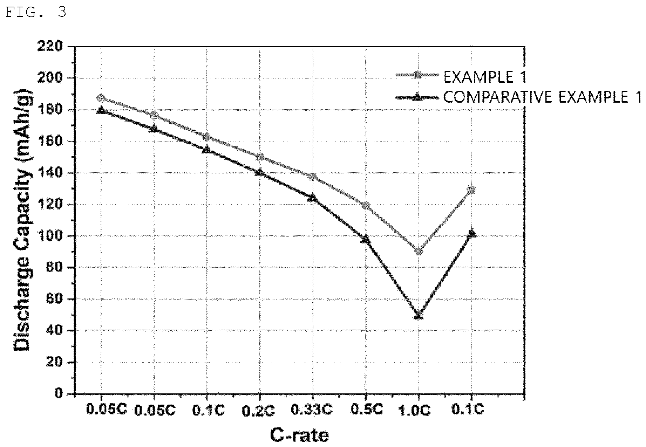

The prepared all-solid-state battery was charged at a rate of 0.05 C to an upper limit voltage of 4.25 V in a constant current/constant voltage (CC/CV) mode while maintaining a temperature of 60°C, and then discharged at 0.05 C to an end voltage of 3 V in a CC mode to perform initial two cycle charging and discharging. Thereafter, charging was performed at a rate of 0.1 C, rate capability was evaluated while stepwise changing the discharging rate to 0.1 C, 0.2 C, 0.33 C, 0.5 C, 1.0 C, and 0.1 C, and the results thereof are presented in FIG. 3.

FIG. 3 is rate capability evaluation data of the all-solid-state batteries including the solid electrolytes of Example 1 and Comparative Example 1.

**EP 4 564 510 A1**

Referring to FIG. 3, with respect to the all-solid-state battery including the solid electrolyte of Example 1 according to the present invention, it may be confirmed that rate capability was better than that of the all-solid-state battery including the solid electrolyte of Comparative Example 1 in which the integral value of the $Li_2CO_3$ band present in the range of 5,200 cm$^{-1}$ to 4,725 cm$^{-1}$ in the NIR spectrum was less than 0.2.

As a result, since the solid electrolyte according to the present invention not only includes the buffer layer including $Li_2CO_3$ which is formed on the particle, but the integral value of the $Li_2CO_3$ band present in the range of 5,200 cm$^{-1}$ to 4,725 cm$^{-1}$ in the NIR spectrum also satisfies a range of 2.0 to 8.0, a stable phase is maintained when exposed to moisture during the battery preparation process and an interfacial side reaction between the solid electrolyte and the electrode material may be suppressed, and thus, it may be understood that the solid electrolyte according to the present invention may improve battery characteristics.

**Claims**

1. A solid electrolyte comprising:

   sulfide-based solid electrolyte particles; and
   a buffer layer including $Li_2CO_3$ which is formed on the sulfide-based solid electrolyte particle,
   wherein, in a near-infrared (NIR) spectrum, an integral value of a $Li_2CO_3$ band present in a range of 5,200 cm$^{-1}$ to 4,725 cm$^{-1}$ is in a range of 2.0 to 8.0.

2. The solid electrolyte of claim 1, wherein the sulfide-based solid electrolyte has an argyrodite-type crystal structure.

3. The solid electrolyte of claim 1, wherein the sulfide-based solid electrolyte has a composition represented by Formula 1:

   [Formula 1]     $Li_a(P_{1-b}M_b)S_{6-c}X_c$

   wherein, in Formula 1,

   M is at least one selected from antimony (Sb), tin (Sn), germanium (Ge), silicon (Si), niobium (Nb), nickel (Ni), gallium (Ga), and aluminum (Al),
   X is at least one selected from fluorine (F), chlorine (Cl), bromine (Br), and iodine (I), and
   $5.0 < a < 7.5$, $0 \leq b \leq 0.7$, and $0 < c \leq 2.0$.

4. The solid electrolyte of claim 1, wherein ionic conductivity is in a range of 3 mS/cm to 12 mS/cm.

5. The solid electrolyte of claim 1, wherein, in the NIR spectrum, an integral value of a LiOH band present in a range of 7,200 cm$^{-1}$ to 7,140 cm$^{-1}$ is less than 0.1.

6. The solid electrolyte of claim 1, wherein, in a 2p spectrum of phosphorus (P) that is obtained by X-ray photoelectron spectroscopy (XPS) analysis, a ratio $(A_2/(A_1+A_2))$ of a $PO_xS_{4-x}^{3-}$ peak area $(A_2)$ to a sum of a $PS_4^{3-}$ peak area $(A_1)$ and the $PO_xS_{4-x}^{3-}$ peak area $(A_2)$ is less than 0.1.

7. An all-solid-state battery comprising the solid electrolyte of any one of claims 1 to 6.

FIG. 1

FIG. 2

FIG. 3

## INTERNATIONAL SEARCH REPORT

| International application No. |
| --- |
| **PCT/KR2024/004034** |

**A.    CLASSIFICATION OF SUBJECT MATTER**

**H01M 10/0562**(2010.01)i; **H01M 10/052**(2010.01)i

According to International Patent Classification (IPC) or to both national classification and IPC

**B.    FIELDS SEARCHED**

Minimum documentation searched (classification system followed by classification symbols)

H01M 10/0562(2010.01); C01B 25/45(2006.01); H01B 13/00(2006.01); H01M 10/052(2010.01); H01M 10/0525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all-solid battery), 황화물계 고체 전해질(sulfide-based solid electroly te), 버퍼층(buffer layer), Li2CO3, NIR 스펙트럼(NIR spectrum)

**C.    DOCUMENTS CONSIDERED TO BE RELEVANT**

| Category* | Citation of document, with indication, where appropriate, of the relevant passages | Relevant to claim No. |
| --- | --- | --- |
| Y | ZHANG, X. et al. Spontaneous gas–solid reaction on sulfide electrolytes for high-performance all-solid-st ate batteries. Energy & Environmental Science. 16 January 2023, vol. 16, no. 3, pp. 1091-1099.<br>    See pages 1091-1092 and 1096. | 1-7 |
| Y | US 2020-0235423 A1 (TOYOTA JIDOSHA KABUSHIKI KAISHA) 23 July 2020 (2020-07-23)<br>    See claim 4; paragraphs [0031], [0034], [0093], [0095] and [0098]-[0105]; figure 1; and table 2. | 1-7 |
| A | CN 110459798 A (ZHEJIANG FENGLI NEW ENERGY TECHNOLOGY CO., LTD.) 15 November 2019 (2019-11-15)<br>    See entire document. | 1-7 |
| A | KR 10-2019-0130155 A (THE REGENTS OF THE UNIVERSITY OF MICHIGAN) 21 November 2019 (2019-11-21)<br>    See entire document. | 1-7 |
| A | WO 2022-186156 A1 (MITSUI MINING & SMELTING CO., LTD.) 09 September 2022 (2022-09-09)<br>    See entire document. | 1-7 |

☐ Further documents are listed in the continuation of Box C.    ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **27 June 2024** | **28 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004034**

| Patent document cited in search report | | | Publication date (day/month/year) | Patent family member(s) | | | Publication date (day/month/year) |
|---|---|---|---|---|---|---|---|
| US | 2020-0235423 | A1 | 23 July 2020 | CN | 111446492 | A | 24 July 2020 |
| | | | | CN | 111446492 | B | 01 August 2023 |
| | | | | JP | 2020-114787 | A | 30 July 2020 |
| | | | | JP | 7196625 | B2 | 27 December 2022 |
| | | | | US | 11444320 | B2 | 13 September 2022 |
| | | | | US | 11489196 | B2 | 01 November 2022 |
| CN | 110459798 | A | 15 November 2019 | CN | 110459798 | B | 20 September 2022 |
| KR | 10-2019-0130155 | A | 21 November 2019 | CN | 110692159 | A | 14 January 2020 |
| | | | | EP | 3602672 | A1 | 05 February 2020 |
| | | | | EP | 3602672 | A4 | 16 December 2020 |
| | | | | JP | 2020-516028 | A | 28 May 2020 |
| | | | | JP | 7209636 | B2 | 20 January 2023 |
| | | | | US | 10938061 | B2 | 02 March 2021 |
| | | | | US | 2018-0301752 | A1 | 18 October 2018 |
| | | | | WO | 2018-184007 | A1 | 04 October 2018 |
| WO | 2022-186156 | A1 | 09 September 2022 | CN | 116888690 | A | 13 October 2023 |
| | | | | EP | 4303183 | A1 | 10 January 2024 |
| | | | | JP | 2022-186156 | A1 | 09 September 2022 |
| | | | | KR | 10-2023-0136149 | A | 26 September 2023 |
| | | | | US | 2024-0128515 | A1 | 18 April 2024 |

Form PCT/ISA/210 (patent family annex) (July 2022)

**EP 4 564 510 A1**

**Patent documents cited in the description**

- KR 1020230042176